# EUROPÄISCHE PATENTANMELDUNG

(11) **EP 1 031 466 A1**
(43) Veröffentlichungstag der Anmeldung: **30.08.2000**
(21) Anmeldenummer: 99810904.5
(22) Anmeldetag: 05.10.1999
(51) Int. Cl.: B60R 13/10, B62B 3/14, G09F 15/00

(54) **Halter zur Aufnahme eines auswechselbaren Schildes**

(30) Priorität: 24.02.1999 CH 34199
(71) Anmelder: Lualdi, Robert, 6300 Zug (CH)
(72) Erfinder: Lualdi, Robert, 6300 Zug (CH); Mueller, Vivian, 4853 Murgenthal (CH)
(74) Vertreter: Patentanwälte Schaad, Balass, Menzl & Partner AG

(57) **Zusammenfassung**

Die Erfindung betrifft einen Halter (10) zur Aufnahme eines auswechselbaren, insbesondere als Fahrzeugnummernschild ausgebildeten, Schildes (18) mit einem Grundkörper (12) sowie mit einer vor dem Schild (18) angeordneten Abdeckung (36). Um einen solchen Halter (10) so auszugestalten, dass das Auswechseln eines Schildes (18) leichter und schneller vorgenommen werden kann, ist erfindungsgemäss vorgesehen, dass die Abdeckung (36) sowohl schwenkbar als auch verschiebbar im Grundkörper (12) gelagert ist.

## Beschreibung

Die Erfindung betrifft einen Halter zur Aufnahme eines auswechselbaren Schildes, insbesondere eines Namens-, Nummern-, Türschildes o. dgl., mit einem Grundkörper und einer mit diesem verbundenen Abdeckung wobei das Schild zwischen Grundkörper und Abdeckung fixierbar ist.

Solche Halter sind z.B. aus FR-A1-2 625 587 hinlänglich bekannt und dienen z. B. zur Aufnahme von Nummernschildern bei Fahrzeugen. Damit solche Halter auch nach einem Wechsel des Schildes nicht unbrauchbar werden, sind die Schilder auswechselbar in dem Halter aufgenommen. Dazu ist der Halter mit einer vor dem Schild angeordneten, beispielsweise lösbaren Abdeckung versehen, die einen Austausch des Schildes ermöglicht.

Nachteilig bei den bekannten Haltern ist, dass das Auswechseln des Schildes oftmals umständlich ist.

Es ist daher Aufgabe der vorliegenden Erfindung, einen Halter der eingangs genannten Art so auszugestalten, dass das Auswechseln eines Schildes einfach und schnell vorgenommen werden kann.

Diese Aufgabe wird bei einem Halter der genannten Art dadurch gelöst, dass die Abdeckung auf einer durchgehenden, biegsamen Lagerachse sowohl schwenkbar als auch verschiebbar gelagert ist, wobei die Lagerachse in Langlöchern mit zum Grundkörper parallel ausgerichteten Längsachsen gelagert. Die Lagerachse wird in Vorspannung gehalten und ist durch ein am Grundkörper angeordnetes Auflager in den Langlöchern fixierbar.

Durch die Biegsamkeit der Lagerachse kann diese gleichzeitig als Feder wirken. Die Federwirkung ist dabei so ausgestaltet, dass sie eine linear gerichtete Vorspannung der Abdeckung gegenüber der Grundplatte bewirkt. Das Auflager dient zur Fixierung der in den Langlöchern gelagerten Lagerachse. Zugleich wird die biegsame Lagerachse bei einer linearen Beaufschlagung der Abdeckung entgegen ihrer Vorspannung um dieses Auflager gebogen.

Das Auswechseln des Schildes wird dadurch bewerkstelligt, dass die Abdeckung zuerst gegen die Vorspannung, unter der die Lagerachse steht, durch eine kombinierte Schwenk/Schiebebewegung entriegelt und vom Grundkörper weggeklappt wird, anschliessend ein Schild zwischen Grundkörper und Abdeckung entnommen bzw. eingesetzt werden kann, und schliesslich durch eine umgekehrt ablaufende Schwenk/Schiebebewegung die Abdeckung wieder zum Grundkörper hingeklappt und mit diesem verriegelt wird. Dieser Vorgang ist einfach und schnell ohne jegliches Zusatzwerkzeug durchführbar.

Vorteilhafterweise ist die Abdeckung schwenkbar an den Enden der Lagerachse gehalten und zusammen mit diesen Enden in den Langlöchern verschiebbar. Diese Ausgestaltung ermöglicht ein einfaches und schnelles Öffnen und Schliessen des Halters beim Auswechseln des Schildes.

Nach einer bevorzugten Weiterbildung weist der Grundkörper eine im wesentlichen rechteckige Grundplatte auf, die beispielsweise mittels eines Stanz-/Biegeverfahrens auf einfache und billige Art aus einem Blechstreifen herstellbar ist. Die Grundplatte weist federnde Zungen auf, die das Schild auf seiner Rückseite beaufschlagen. Durch diese Massnahme wird ein sicherer Halt des Schildes gewährleistet. Dies ist insbesondere bei Schildern für Fahrzeuge wichtig, bei denen auf diese Weise ein Klappern des Schildes während der Fahrt vermieden wird.

Der sichere Halt des Schildes kann noch weiter verbessert werden, wenn gemäss einer weiteren Ausgestaltung der Grundkörper an zwei gegenüberliegenden Rändern Auflagen für das Schild aufweist.

Um sowohl eine einfache Herstellung des Grundkörpers als auch einen sicheren Halt des Schildes zu ermöglichen, weisen vorteilhafterweise die Auflagen je eine im wesentlichen senkrecht zur Grundplatte verlaufende Aussenwand sowie je eine parallel und im Abstand zur Grundplatte verlaufende Vorderwand auf.

In jeder Aussenwand ist vorteilhafterweise in der Nähe ihres einen Endes ein Langloch vorgesehen. In diesen Langlöchern ist eine sich zwischen den Langlöchern erstreckende Lagerachse gehalten, mittels derer Grundkörper und Abdeckung schwenkbar miteinander verbunden sind.

Das Auflager ist bevorzugt als umgebogener Randbereich des Grundkörpers ausgebildet, der sich im wesentlichen zwischen den Langlöchern erstreckt. Dabei kann der Randbereich einen im wesentlichen V-förmigen Verlauf aufweisen, wobei die freien Enden des V im Bereich der oberen Ränder der Langlöcher enden. Die Spitze des V kann dabei das Auflager für die Lagerachse bilden.

Vorteilhafterweise ist die Grundplatte an der dem genannten Randbereich gegenüberliegenden Seite mit einer zur Abdeckung weisenden Abkantung versehen. Hierdurch wird auf einfache Weise eine Lasche geschaffen, die von der Abdeckung in ihrer zur Grundplatte hin geklappten Position verriegelnd übergriffen werden kann.

Gemäss einer weiteren vorteilhaften Ausgestaltung ist in jeder Aussenwand in der Nähe ihres dem Langloch gegenüberliegenden Endes eine Öffnung zur Aufnahme eines insbesondere lösbaren Fixierstiftes vorgesehen. Hierdurch wird eine zusätzliche Befestigung der Abdeckung an dem Grundkörper erreicht.

Damit das Schild am Grundkörper nicht verrutschen kann und sicher gehalten ist, besteht die Abdeckung vorteilhafterweise aus einer im wesentlichen rechteckigen Grundfläche, die auf drei Seiten von senkrecht zur Grundfläche angeordneten Seitenwänden begrenzt ist.

Damit das Schild gut sichtbar ist, ist nach einer weiteren Ausgestaltung die Grundfläche durchsichtig oder weist einen an die Grösse des Schildes angepassten Ausschnitt auf.

Damit eine freie Schwenk- und Verschiebbarkeit der Abdeckung gewährleistet ist, ist nach einer weiteren Ausgestaltung die Lagerachse im Bereich der seitenwandfreien Seite der Grundfläche der Abdeckung angeordnet. Die Verschiebbarkeit der Abdeckung ist dabei im wesentlichen entlang einer sich parallel zur Ebene des Grundkörpers erstreckenden Ebene gegeben.

Die auf der der Lagerachse gegenüberliegenden Seite angeordnete Seitenwand der Abdeckung ist vorzugsweise mit einer in Richtung auf die Lagerachse weisenden Abkantung versehen. Diese Abkantung übergreift bei zur Grundplatte hin geklappten Abdeckung die vorstehend erwähnte, laschenartige Abkantung der Grundplatte und verriegelt somit Grundplatte und Abdeckung.

Weitere vorteilhafte Merkmale und Ausgestaltungen sind ergeben sich aus den weiteren abhängigen Ansprüchen und der nachfolgenden Beschreibung eines bevorzugten Ausführungsbeispiels. Es zeigen
- Fig. 1: eine Explosionsdarstellung des erfindungsgemässen Halters mit einem als Fahrzeug-Nummernschild ausgebildeten Schild,
- Fig. 2: eine Darstellung der Arbeitsschritte beim Auswechseln des Schildes in Verbindung mit dem erfindungsgemässen Halter und
- Fig. 3: eine teilweise geschnittene Darstellung des erfindungsgemässen Halters, wobei im rechten Bereich der Figur der Halter mit Abdeckung und eingesetztem Schild und im linken Bereich der Halter ohne Abdeckung und Schild dargestellt ist.

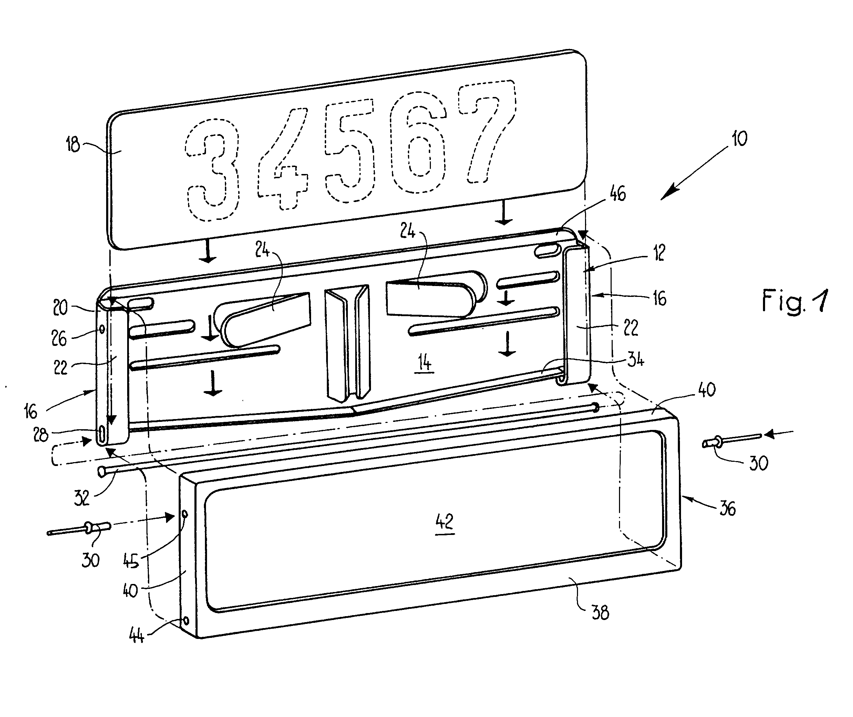

Die Fig. 1 zeigt den erfindungsgemässen Halter 10 in seiner Gesamtheit. Er umfasst einen Grundkörper 12, der eine im wesentlichen rechteckige Grundplatte 14 aufweist. Auf zwei einander gegenüberliegenden Seiten der Grundplatte 14 sind Auflagen 16 vorgesehen, die zur Stütze eines vorzugsweise als Fahrzeugnummernschild ausgestalteten Schildes 18 dienen. Die Auflagen 16 umfassen je eine Aussenwand 20, die senkrecht zur Grundplatte 14 angeordnet ist, und eine Vorderwand 22, die parallel und im Abstand zur Grundplatte 14 verläuft. Die beiden Auflagen 16 bilden gemeinsam mit der Grundplatte je eine im wesentlichen U-förmige Stütze für das Schild 18. Mittels einer Abdeckung 36 wird das Schild 18 mit zwei einander gegenüberliegende Randbereichen jeweils gegen die Vorderwand 22 einer der beiden Auflagen 16 gedrückt und fixiert.

Auf der Grundplatte 14 des Grundkörpers 12 sind federnde Zungen 24 vorgesehen, die das Schild 18 auf seiner Rückseite beaufschlagen und es so gegen die Abdeckung 36 verspannen.

In den Aussenwänden 20 der Auflagen 16 ist in der Nähe des oberen Endes je eine Öffnung 26 und in der Nähe des unteren Endes je ein Langloch 28 vorgesehen. Die Langlöcher 28 erstrecken sich mit ihrer Längsachse parallel zum Grundkörper 12, d.h. parallel zur Grundplatte 14. Die beiden Öffnungen 26 dienen zur Aufnahme von Fixierstiften 30, während in den beiden Langlöchern 28 eine biegsame Lagerachse 32 aufgenommen ist.

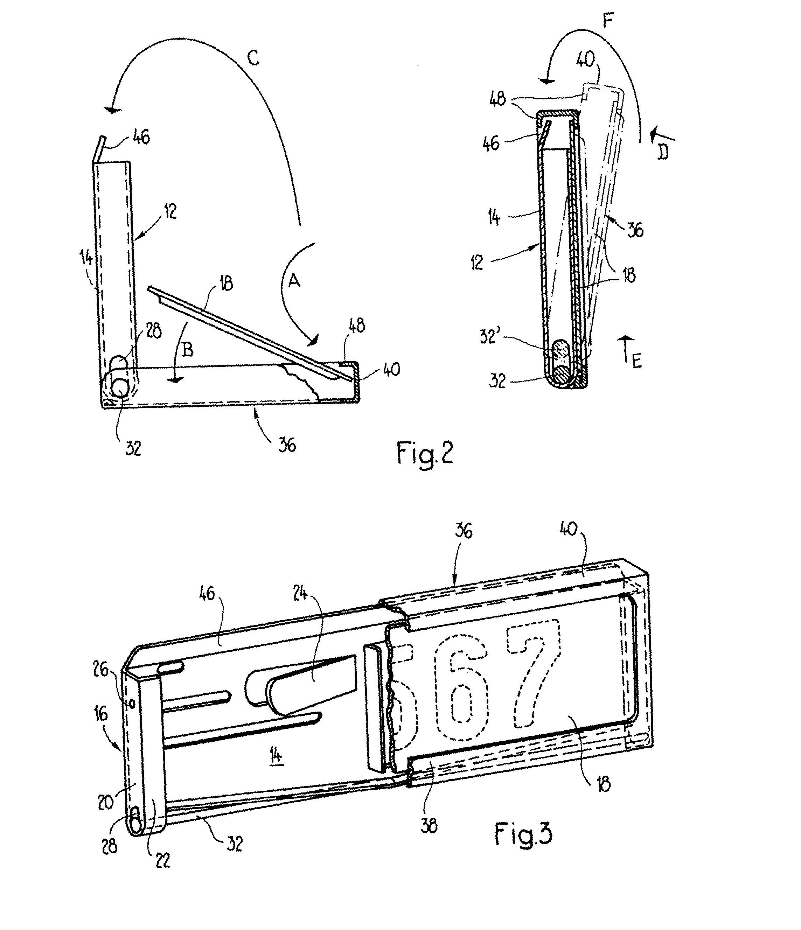

An der Unterkante der Grundplatte 14 ist ein vorstehender Randbereich 34 vorgesehen. Dieser vorstehende Randbereich 34 erstreckt sich im wesentlichen zwischen den beiden Auflagen 16 bzw. zwischen den beiden Langlöchern 28. Der Randbereich 34 hat eine V-förmige Gestalt, wobei die freien Enden des V direkt oberhalb der Langlöcher 28 enden und die nach unten weisende Spitze des V etwa in der Mitte der Grundplatte 14 angeordnet ist. Der vorstehende Randbereich 34 liegt als Auflager mit der Spitze des V an der federnd ausgebildeten Lagerachse 32 an, um diese in Richtung auf das untere Ende der Langlöcher 28 vorzuspannen, wie dies insbesondere aus Fig. 3 ersichtlich ist.

Auf der Lagerachse 32 ist eine Abdeckung 36 schwenkbar gelagert. Diese Abdeckung 36 umfasst eine im wesentlichen rechteckige Grundfläche 38, die auf drei Seiten von Seitenwänden 40 begrenzt ist, die senkrecht zur Grundfläche 38 angeordnet sind. Die Grundfläche 38 ist entweder durchsichtig (nicht dargestellt) oder mit einem Ausschnitt 42 versehen, durch den das Schild 18 sichtbar ist.

In zwei gegenüberliegenden Seitenwänden 40 ist im Bereich der seitenwandfreien Seite der Grundfläche 38 je eine mit einem Langloch 28 des Grundkörpers korrespondierende Öffnung 44 zur Aufnahme der Lagerachse 32 vorgesehen. In den gleichen Seitenwänden 40 ist weiterhin je eine Öffnung 45 vorgesehen, die jeweils mit der zugeordneten Öffnung 26 in den Aussenwänden 20 der Aufnahmen 16 korrespondiert und zur Aufnahme der Fixierstifte 30 dient.

An der Grundplatte 14 des Grundkörpers 12 ist auf der der Lagerachse 32 gegenüberliegenden Seite eine zur Abdeckung 36 weisende Abkantung 46 vorgesehen. Weiterhin ist an der der Lagerachse 32 gegenüberliegenden Seitenwand 40 der Abdeckung 36 eine in Richtung auf die Lagerachse 32 weisende Abkantung 48 vorgesehen, die mit der Abkantung 46 an der Grundplatte 14 zusammenwirkt.

In Fig. 2 sind die Arbeitsschritte dargestellt, die beim Einsetzen bzw. Auswechseln des Schildes 18 erforderlich sind.

Zunächst wird gemäss Pfeil A ein Randbereich des Schildes 18 unter die aus der einen Seitenwand 40 und der Abkantung 48 gebildete Tasche geschoben, danach wird das Schild 18 gemäss Pfeil B vollständig in die Abdeckung 36 eingelegt. Die Abdeckung 36 wird dann mit dem Schild 18 gemäss Pfeil C in Richtung auf den Grundkörper 12 verschwenkt. Gegen Ende der Schwenkbewegung (Pfeil D) wird die Abdeckung 36 im wesentlichen parallel zum Grundkörper 12 in Richtung des Pfeiles E verschoben. Dabei gleiten die beiden Enden der Lagerachse 32 in den Langlöchern 28 der Aussenwände 20 in Richtung des Pfeiles E in eine Position 32'. Die Lagerachse 32 biegt sich dabei durch, da sich die als Auflager wirkende Spitze des V des vorstehenden Randbereichs 34 nicht mitbewegt und somit auf den mittleren Bereich der Lagerachse 32 einen Druck ausübt.

Am Ende der Schwenk-/Verschiebebewegung wird die Abkantung 48 der Abdeckung 36 über die Abkantung 46 des Grundkörpers 12 gehoben (Pfeil F). Wenn die Abdeckung 36 nun losgelassen wird, wird durch die von der Lagerachse 32 ausgeübte Federwirkung die Abdeckung 36 entgegen Pfeil E nach unten gezogen und die Abkantung 48 kommt mit der Abkantung 46 verriegelnd in Eingriff.

Schliesslich können noch die Fixierstifte 30 durch die miteinander fluchtenden Öffnungen 26, 45 in den Aussenwänden 20 der Auflagen 16 bzw. in den Seitenwänden 40 der Abdeckung 36 gesteckt werden. Auf diese Weise ist eine sichere und feste Lagerung des Schildes 18 gewährleistet. Vorzugsweise sind die Fixierstifte 30 lösbar, um ein Auswechseln des Schildes 18 zu ermöglichen.

In Fig. 3 ist der erfindungsgemässe Halter 10 dargestellt, wobei die Abdeckung 36 und das Schild 18 nur teilweise gezeigt sind. Es ist zu erkennen, wie das Schild 18 zwischen den Vorderwänden 22 der Auflagen 16 der Grundplatte 14 und der Abdeckung 36 gehalten ist.

Im dargestellten Ausführungsbeispiel verläuft die Lagerachse 32 horizontal. Es wäre jedoch alternativ auch möglich, die Lagerachse 32 vertikal anzuordnen.

## Patentansprüche

1. Halter zur Aufnahme eines auswechselbaren Schildes (18), insbesondere eines Fahrzeugnummernschildes, mit einem Grundkörper (12) und einer mit diesem verbundenen Abdeckung (36), wobei die Abdeckung (36) sowohl um eine in Langlöchern (28) des Grundkörpers (12) gelagerte Achse schwenkbar als auch verschiebbar ist und das Schild (18) zwischen Grundkörper (12) und Abdeckung (36) fixierbar ist, dadurch gekennzeichnet, dass die Langlöcher (28) mit ihrer Längsachse parallel zum Grundkörper (12) ausgerichtet sind und die Achse eine durchgehende, biegsame Lagerachse (32) ist, die in Vorspannung gehalten und durch ein am Grundkörper (12) angeordnetes Auflager (34) in den Langlöchern (28) fixierbar ist.

2. Halter nach Anspruch 1, dadurch gekennzeichnet, dass der Grundkörper (12) eine im wesentlichen rechteckige Grundplatte (14) aufweist, an welcher an zwei gegenüberliegenden Rändern vorzugsweise Auflagen (16) für das Schild (18) angeordnet sind.

3. Halter nach Anspruch 2, dadurch gekennzeichnet, dass die Abdeckung (36) schwenkbar im Bereich der Enden der Lagerachse (32) gehalten und zusammen mit diesen Enden der Lagerachse (32) in den Langlöchern (28) im wesentlichen parallel zur Ebene des Grundplatte (14) verschiebbar ist.

4. Halter nach einem der Ansprüche 1 bis 3, dadurch gekennzeichnet, dass die Abdeckung (36) eine im wesentlichen rechteckigen Grundfläche (38) aufweist, die durchsichtig ist oder einen Ausschnitt (42) aufweist, durch den das Schild (18) sichtbar ist.

5. Halter nach Anspruch 4, dadurch gekennzeichnet, dass die Grundfläche (38) der Abdeckung (36) auf drei Seiten von senkrecht zur Grundfläche (38) angeordneten Seitenwänden (40) begrenzt ist, die zusammen mit der Grundfläche einen Aufnahmeraum für das Schild festlegen.

6. Halter nach Anspruch 5, dadurch gekennzeichnet, dass die Lagerachse (32) im Bereich der seitenwandfreien Seite der Abdeckung (36) angeordnet ist.

7. Halter nach einem der Ansprüche 2 bis 6, dadurch gekennzeichnet, dass die Auflagen (16) des Grundkörpers (12) je eine im wesentlichen senkrecht zur Grundplatte (14) verlaufende Aussenwand (20) sowie je eine parallel und im Abstand zur Grundplatte (14) verlaufende Vorderwand (22) aufweisen.

8. Halter nach Anspruch 7, dadurch gekennzeichnet, dass jede Aussenwand (20) in der Nähe ihres einen Endes eines der sich mit ihren Längsachsen parallel zur Grundplatte (14) verlaufenden Langlöcher (28) aufweist und jedes Langloch (28) vorzugsweise mit einer Öffnung (44) in der Seitenwand (40) der Abdeckung (36) korrespondiert.

9. Halter nach Anspruch 7 oder 8, dadurch gekennzeichnet, dass in zumindest einer Aussenwand (20), vorzugsweise in der Nähe ihres dem Langloch (28) gegenüberliegenden Endes, eine Öffnung (26) zur Aufnahme eines vorzugsweise lösbaren Fixierstiftes (30) vorgesehen ist, die mit einer Öffnungen (45) in der Seitenwand (40) der Abdeckung (36) korrespondiert.

10. Halter nach einem der Ansprüche 1 bis 9, dadurch gekennzeichnet, dass das Auflager (34) als umgebogener Randbereich (34) des Grundkörpers (12) ausgebildet ist, der sich im wesentlichen zwischen den Langlöchern (28) erstreckt.

11. Halter nach Anspruch 10, dadurch gekennzeichnet, dass der vorstehende Randbereich (34) einen im wesentlichen V-förmigen Verlauf aufweist, wobei die freien Enden des V im Bereich der oberen Ränder der Langlöcher (28) enden und die Spitze des V das Auflager (34) für die Lagerachse (32) bildet.

12. Halter nach Anspruch 10 oder 11, dadurch gekennzeichnet, dass die Grundplatte (14) an der dem Randbereich (34) gegenüberliegenden Seite mit einer zur Abdeckung (36) weisenden Abkantung (46) versehen ist.

13. Halter nach Anspruch 12, dadurch gekennzeichnet, dass die Abdeckung (36) auf der der Lagerachse (32) gegenüberliegenden Seite mit einer in Richtung auf die Lagerachse (32) weisenden Abkantung (48) versehen ist, welche im geschlossenen Zustand des Halters (10) die Abkantung (46) der Grundplatte (14) hintergreift.
